# EUROPÄISCHE PATENTSCHRIFT

(11) **EP 1 103 437 B1**
(45) Veröffentlichungstag und Bekanntmachung des Hinweises auf die Patenterteilung: **07.12.2005**
(21) Anmeldenummer: 00125254.3
(22) Anmeldetag: 24.11.2000
(51) Int. Cl.: B60T 17/22, G01L 5/28

(54) **Bremsprobeanlage und Verfahren zur Überprüfung der Funktion von Bremsen in Schienenfahrzeugen**
Brake test system and method for function testing of brakes in railway vehicles
Installation pour tester un frein et procédure pour tester le fonctionnement des freins dans des véhicules ferroviaires

(30) Priorität: 25.11.1999 DE 19956808
(43) Veröffentlichungstag der Anmeldung: 30.05.2001
(73) Patentinhaber: KNORR-BREMSE Systeme für Schienenfahrzeuge GmbH, 80809 München (DE)
(72) Erfinder: Haselsteiner, Kurt, 1120 Wien (AT)
(74) Vertreter: Mattusch, Gundula

(56) Entgegenhaltungen:
- DD-A- 225 675
- DE-A- 3 704 826
- DE-C- 19 850 698

## Beschreibung

Die Erfindung betrifft eine Bremsprobeanlage zur Prüfung von Druckluftbremsen bei Schienenfahrzeugen mit einem zentralem Bremsprobegerät und wenigstens einer Zusatzgeräteeinheit sowie ein Verfahren zur Prüfung von Druckluftbremsen mit einer derartigen Bremsprobeanlage an einem Schienenfahrzeug.

Bremsprobeanlagen für Schienenfahrzeuge sind beispielsweise aus der DE 37 04 826.0 bekanntgeworden.

Die Bremsprobe- bzw. Bremsprüfanlage gemäß der DE 37 04 826.0 weist durch eine speicherprogrammierbare Steuereinheit ansteuerbare Magnetventile zur Steuerung des zeitlichen und druckmäßigen Ablaufs der Bremsenprüfungen und Anzeigevorrichtung auf. Nach dem Einschalten werden selbsttätig ein Angleichvorgang, eine Dichtheitsprobe bei gelösten Bremsen, ein Wiederauffüllen, ein Einbremsen, eine Dichtheitsprobe im eingebremsten Zustand und ein Verstärken der Einbremsung gesteuert. Nach manueller Abgabe eines Lösebefehls wird gegebenenfalls mit einem dem Druckluftverbrauch angepaßten Niederdruck Füllstoß gelöst und der Hauptluftleitungsdruck auf die untere Toleranzgrenze der Regeldruckhöhe eingestellt.

Um den Unfallverhütungsvorschriften zu genügen, ist es erforderlich, daß bei einer Bremsprobeanlage gemäß der DE 37 04 826.0 neben jedem Fahrbereich auf einer Seite ein Bereich vorhanden ist, in den ein Bediensteter vor herannahenden Schienenfahrzeugen ausweichen kann; dieser Bereich wird als Sicherheitsraum bezeichnet.

Der Sicherheitsraum muß mindestens 2,0 m hoch und bei Fahrgeschwindigkeiten bis 30 km/h mindestens 0,5 m breit, bei Fahrgeschwindigkeiten über 30 km/h und bis 100 km/h mindestens 0,7 m breit sowie bei Fahrgeschwindigkeiten über 100 km/h mindestens 0,8 m breit sein.

Ist der Sicherheitsraum zwischen zwei Fahrbereichen angeordnet, muß er mindestens 0,8 m breit sein.

Die Baubreiten von Bremsprobeanlagen wie beispielsweise aus der DE 37 04 826.0 bekannt, betragen ca. 360 mm. Für den minimalen Gleismittenabstand bei geraden Gleisen ergeben sich dann 4,76 m.

Andererseits beeinflußt die Länge der Druckluftleitung zwischen Bremsprobegerät und dem Wagenzug, d.h. dem Absperrhahn am Wagen, das Ergebnis der Dichtheitsprüfung wesentlich. Für den Füllvorgang muß das gesamte Volumen aller Druckluftbehälter am Wagen berücksichtigt werden. Während der Dichtheitsprüfung ist nur das Volumen der Hauptluftleitung (HL) und das Volumen der A-Kammer des Steuerventiles wirksam. Da die Leitung zwischen Bremsprobegerät und Wagenabsperrhahn sicher dicht ist, trägt diese Leitung nicht zum Druckabfall bei. Ein Luftverlust im Wagenzug wird aus diesem Volumen teilweise ausgeglichen und verfälscht damit das Ergebnis der Dichtheitsprüfung. Ein möglicherweise undichter Zug wird als dicht gewertet. Je länger die Druckluftzuleitung im Verhältnis zur Zuglänge ist, um so stärker wird das Ergebnis verfälscht.

Um diesen Problemen zu begegnen, ist es erforderlich, die Länge zwischen dem Absperrorgan, d.h. dem Bremsprobegerät und dem Wagenzug, auf 25 m zu begrenzen.

Oftmals reicht aber der Einbauraum zwischen zwei Gleisen nicht aus, um einerseits die maximale Länge der Schlauchleitung zum zu prüfenden Zug von 25 m sicherzustellen und gleichzeitig die Sicherheitserfordernisse zu erfüllen. Insbesondere gibt es bei Rangierbahnhöfen zwar sehr umfangreiche Gleisanlagen, die für den Rangierbetrieb auch genützt werden sollen, nicht an allen Gleisen ist aber aus obengenannten Gründen der Einbau einer Bremsprobeanlage möglich.
Aufgabe der Erfindung ist es somit, eine Bremsprobeanlage anzugeben, mit der die oben beschriebenen Nachteile des Standes der Technik überwunden werden können.

Erfindungsgemäß wird diese Aufgabe durch eine Bremsprobeanlage gemäß Anspruch 1 gelöst, die ein zentrales Bremsprobegerät und wenigstens eine Zusatzgeräteeinheit umfaßt, wobei die Zusatzgeräteeinheit Mittel zum Absperren der Luftzufuhr zum zu prüfenden Schienenfahrzeug umfaßt sowie Drucksensoren und die Zusatzgeräteeinheit mittels einer Luftleitung zur Luftnachspeisung aus dem zentralen Bremsprobegerät und einer elektrischen Verbindungsleitung zur übermittlung eines vom Drucksensor erfassten Druckabfalls an das zentrale Bremsprobegerät mit diesem versehen sind.

Durch eine derartge Anordnung wird sichergestellt, daß wenn der Raum zwischen den Gleisen für die Aufstellung von Bremsprobeanlagen nicht ausreicht, zumindest die Absperreinheit, die während der Dichtheitsprüfung die Luftnachspeisung in die Hauptluftleitung des zu prüfenden Zuges absperrt, so nahe als möglich an der Stelle der Zugprüfung aufgestellt ist und der maximale Abstand der Luftleitung zum zu prüfenden Zug 25 m beträgt.

Vorteilhafte Weiterbildungen der Erfindung sind Gegenstand der Unteransprüche.

In einer bevorzugten Ausführungsform umfaßt die Zusatzgeräteeinheit ein Kolbenventil, ein Magnetventil zur Ansteuerung und einen Drucksensor zur Auswertung des Druckabfalles. Vorzugsweise ist das Zusatzgerät in einem kleinen Fundament unterhalb eines Schlauchständers, der die Zuleitung zum zu prüfenden Zug aufnimmt, eingebaut. Die Pneumatikgeräte sind für den Einsatz im Eisenbahnbereich ausgelegt und damit robust und wartungsarm.

Da für die Dichtheitsprüfung die Schlauchleitung zwischen Absperreinrichtung und Wagenabsperrhahn auf 25 m begrenzt bleiben muß, sind einer Mehrfachausnutzung eines Bremsprobegerätes gemäß dem Stand der Technik durch ein nachgeschaltetes Luftverteilungsnetz enge Grenzen gesetzt. Nur sofern die Anschlußpunkte in einem kleinen Beriech um das Bremsprobegerät liegen, können auch zwei oder mehrere Gleise an ein herkömmliches Bremsprobegerät angeschlossen werden.

Durch die erfindungsgemäße Bremsprobeanlage ist es nunmehr möglich eine Vielzahl von Gleisen, deren Abstand nicht wie im Stand der Technik einer Grenze unterliegt, an ein und dieselbe Bremsprobeanlage anzuschließen.

Für die Auswahl, an welchem Gleis bzw. an welcher Geräteeinheit geprüft werden soll, gibt es erfindungsgemäß zwei Ausgestaltungen.

In einer ersten Ausführungsform erfolgt die Auswahl des Betriebszustandes an einem Schalter, der am Bremsprobegerät selbst angebracht ist. An dem Schalter kann entweder die Funktion "Füllen/Druck erhalten" gewählt werden oder es wird eine Geräteeinheit bzw. ein Zusatzgerät aktiv geschaltet.

In der Schalterstellung "Füllen" sind alle Kolbenventile der externen Zusatzgeräte bzw. Geräteeinheiten geöffnet. Das Bremsprobegerät stellt einen Betriebsdruck von 4,8 bar in der Hauptluftleitung (HL) ein. Sobald an eine der Anschlußstellen ein Zug angeschlossen wird, dessen Luftsystem nahezu leer ist, wird die Füllroutine ausgeführt. Dies bedeutet, daß der Fülldruck abhängig vom Luftbedarf des neu angeschlossenen Zuges auf bis zu sechs bar angehoben wird. Anschließend wird der Druck innerhalb der Unempfindlichkeit der Steuerventile auf das Sollniveau von 4,8 bar abgesenkt. An einem bereits vorher auf 4,8 bar aufgefüllten Zug werden, sofern nicht der Absperrhahn des Zuges aufgeschlossen wird, die Bremsen durch den stattfindenden Luftaustausch angelegt.

In diese Stellung kann der Schalter auch nach erfolgter Bremsprüfung gebracht werden, damit noch auftretende Luftverluste ausgeglichen werden.

Für die Durchführung der Bremsprobe wird auf dem Bremsprobegerät mit dem Wahlschalter die entsprechende Geräteeinheit bzw. das entsprechende Zusatzgerät aktiviert. Die Befehle für die Bremsprobe, d.h. "Dichtheitsprüfung", "Bremsen", "Lösen", werden nur akzeptiert, wenn der Wahlschalter in einer Stellung steht. Es ist dann nur das Kolbenventil der ausgewählten Geräteeinheit aktiv.

Auf diese Weise kann ausgeschlossen werden, daß durch Anschließen eines leeren Zuges die Bremsen eines gerade zu prüfenden Zuges angelegt werden.

In einer alternativen Ausführungsform wird an jeder Zusatzgeräteeinheit eine Fernbetätigung angebracht.

Im Betriebsmodus "Füllen" bzw. "Druck erhalten" des Bediengerätes sind alle Kolbenventile geöffnet und es können mehrere Züge parallel gefüllt werden. Das Ende des Füllvorganges wird auf der Fernbetätigung angezeigt. Durch Betätigen beispielsweise eines Tasters oder Schalters kann nur ein Zusatzgerät für die Bremsprüfung ausgewählt werden.

In diesem Betriebszustand ist nur das Kolbenventil am ausgewählten Zusatzgerät aktiv, alle anderen Kolbenventile sind abgeschaltet. In diesem Betriebszustand werden dann die Befehle für die Bremsprobe ("Dichtheitsprüfung", "Bremsen", "Lösen") akzeptiert.

Nach dem Ende der Bremsprobe wird das ausgewählte Zusatzgerät wieder freigegeben. Es kann jetzt ein anderes Zusatzgerät aktiviert werden.

Die Erfindung soll anhand der Zeichnungen beispielhaft beschrieben werden.

Es zeigen:
Figuren 1 und 2 den Einbau eines Bremsprobegerätes gemäß dem Stand der Technik zwischen zwei Gleisen
Figur 3 die Zusatzgeräteeinheit der erfindungsgemäßen Bremsprobeanlage
Figur 4 eine Gesamtansicht einer erfindungsgemäßen Bremsprobeanlage mit Zusatzgeräteeinheit
Figur 5 eine erfindungsgemäße Bremsprobeanlage mit mehreren Zusatzgeräteeinheiten
Figur 6 ein erfindungsgemäßes zentrales Bremsprobegerät mit Vorwahlschalter
Figur 7 eine Fernbetätigung, die am mit dem Zusatzgerät verbundenen Schlauchständer angeordnet ist.

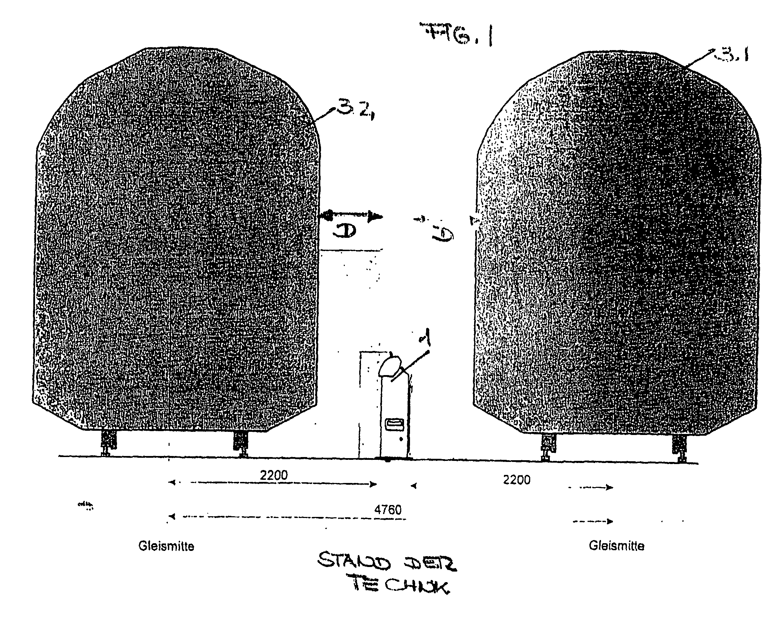

In Figur 1 ist der Aufstellpunkt eines Bremsprobegerätes 1 zwischen zwei zu prüfenden Schienenfahrzeugen 3.1, 3.2 dargestellt. Bei den zu prüfenden Schienenfahrzeugen sind die Grenzlinien der Fahrzeuge gezeigt. Der Abstand D zwischen dem Bremsprobegerät 1 und den Schienenfahrzeugen 3.1, 3.2 beträgt jeweils 0,5 m.

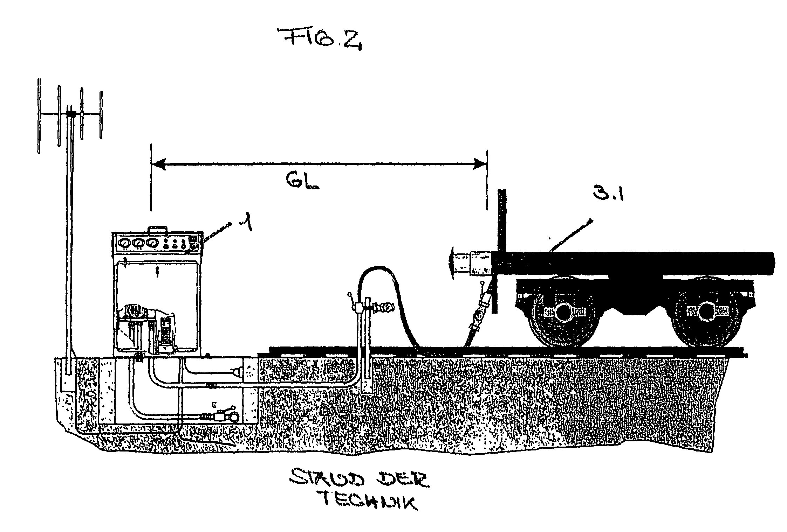

In Figur 2 ist die in Figur 1 dargestellte Bremsprobeanlage 1 gemäß dem Stand der Technik nochmals dargestellt. Ganz entscheidend ist, daß der Abstand zwischen dem Bremsprobegerät 1 und dem zu prüfenden Wagenzug, der vorliegend mit der Bezugsziffer GL gekennzeichnet ist, maximal 25 m beträgt.

Wie aus Figur 2 hervorgeht, muß hierzu der zu prüfende Zug in der Nähe der Bremsprobeanlage 1 abgestellt werden.

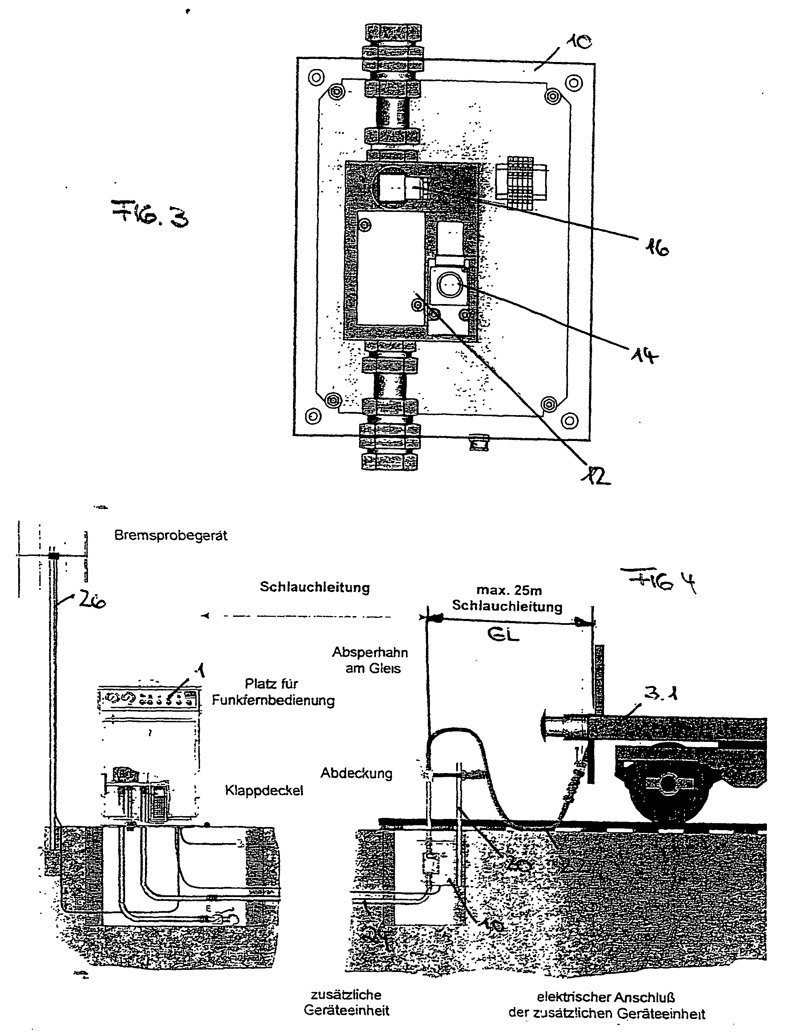

In Figur 3 ist eine Ausführungsform einer Zusatzgeräteeinheit, wie Sie, die erfindungsgemäße Bremsanlage umfasst, dargestellt. Die Zusatzgeräteeinheit 10 umfasst die eine Absperreinheit, die während der Dichtheitsprüfung die Luftnachspeisung in die Hauptluftschaltung des zu prüfendes Zuges absperrt, dargestellt. Die Zusatzgeräteeinheit 10 umfasst ein Kolbenventil 12, ein Magnetventil 14 zur Ansteuerung und einen Drucksensor 16 zur Auswertung des Druckabfalles. Das Zusatzgerät 10 kann in einem kleinen Fundament beispielsweise unterhalb eines Schlauchständers, der die Schlauchleitung mit der der zu prüfende Zug an die Zusatzgeräteeinheit angeschlossen wird, aufnimmt, eingebaut werden. Mit der Zusatzgeräteeinheit 10 ist es möglich, das zentrale Bremsprobegerät 1 an einem Ort weiter als 25 m vom zu prüfenden Zug entfernt aufzustellen. Bei der Dichtheitsprüfung wird die Luftzufuhr bei einem derartigen Aufbau durch das Kolbenventil 12 der Zusatzgeräteeinheit 10 abgesperrt. Der Druckabfall während der Dichtheitsprüfung wird vom Drucksensor 16 der Zusatzgeräteeinheit 10 erfaßt und über eine elektrische Verbindungsleitung an das zentrale Bremsprobegerät 1 übermittelt.

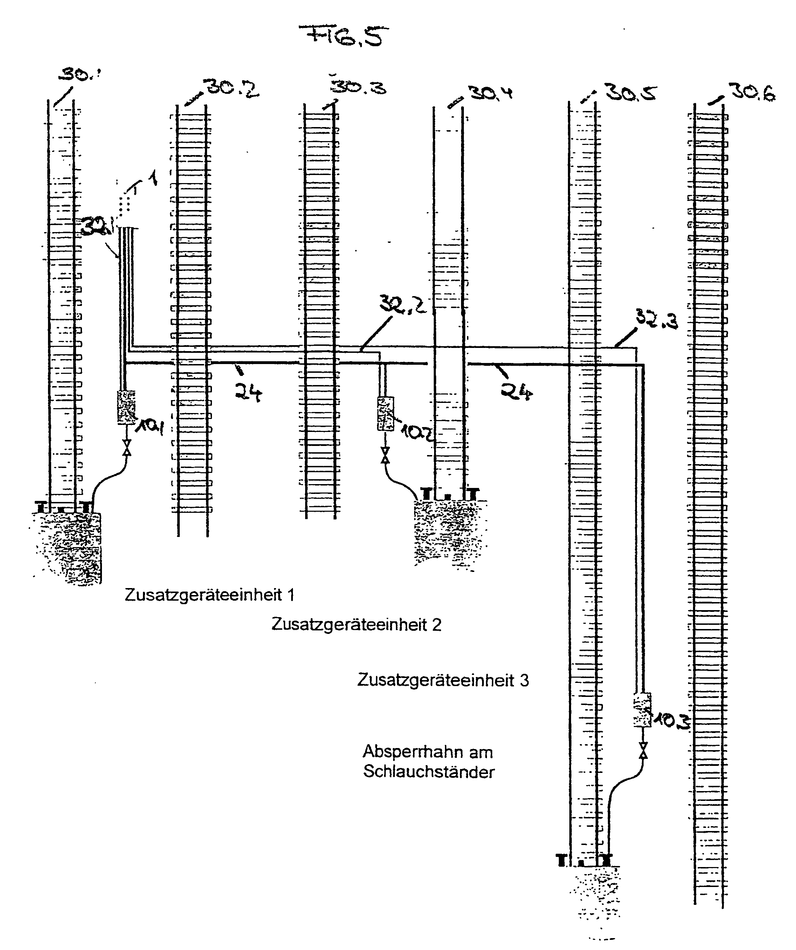

In Figur 4 ist die Anordnung des zentralen Bremsprobegerätes 1 sowie der Zusatzgeräteeinheit 10 analog zur Darstellung des Standes der Technik in Figur 2 für eine Bremsprobeanlage gezeigt. Das zentrale Bremsprobegerät 1 ist entfernt von der Zusatzgeräteeinheit 10 angeordnet. Der Abstand zwischen der Zusatzgeräteeinheit 10 und dem zu prüfenden Schienenfahrzeug 3.1 beträgt maximal 25 m. Die Zusatzgeräteeinheit 10 ist in einem Fundament unterhalb der Gleisanlage angeordnet, bevorzugt nahe einem Schlauchständer 20, auf den der Druckluftschlauch 22, der die leitende Verbindung zwischen dem Zug 3.1 und dem Zusatzgerät 10 darstellt, aufgewickelt werden kann. Das Zusatzgerät 10 wiederum ist über Luftleitung 24 mit dem zentralen Bremsprobegerät 1 verbunden. Die Luftabsperrung erfolgt wie zuvor beschrieben durch das Kolbenventil des Zusatzgerätes 10.

Das zentrale Bremsprobegerät ist in der in Figur 4 dargestellten Ausführungsform als Bremsprobegerät mit Funkfernsteuerung 26 ausgestaltet.

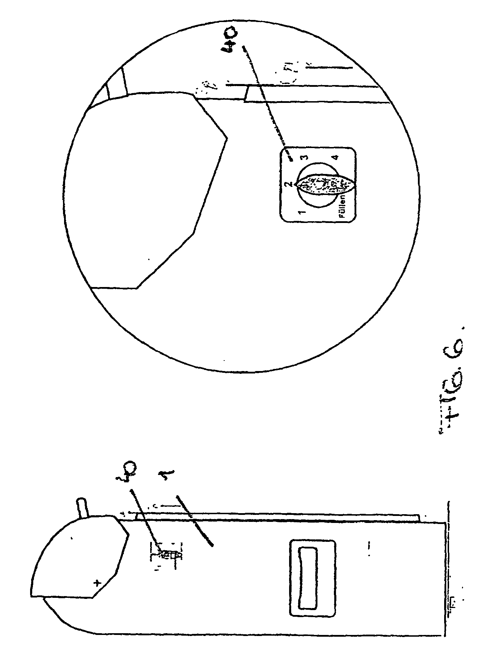

In Figur 5 ist eine erfindungsgemäße Bremsprobeanlage mit mehreren Zusatzgeräten 10, die zwischen einer Vielzahl von Rangiergleisen angeordnet sind, gezeigt. Das zentrale Bremsprobegerät 1 ist zwischen den Gleisen 30.1 und 30.2 angeordnet. Insgesamt umfaßt die in Figur 5 dargestellte Bremsanlage drei Zusatzgeräteeinheiten 10.1, 10.2 sowie 10.3, die über eine gemeinsame Luftleitung 24 mit dem Bremsprobegerät 1 verbunden sind. Zu jedem der Zusatzgeräte 10.1, 10.2 sowie 10.3 führen elektrische Steuerleitungen 32.1, 32.2 sowie 32.3.

Wie aus Figur 5 deutlich hervorgeht, ist es mit der erfindungsgemäßen Anordnung erstmals möglich, mit einem einzigen zentralen Bremsprobegerät 1 an entfernter liegenden Gleisen 30.3, 30.4, 30.5 sowie 30.6 eine Bremsprobe durchzuführen, ohne daß zwischen diesen Gleisen das Aufstellen eines eigenen Bremsprobegerätes erforderlich ist.

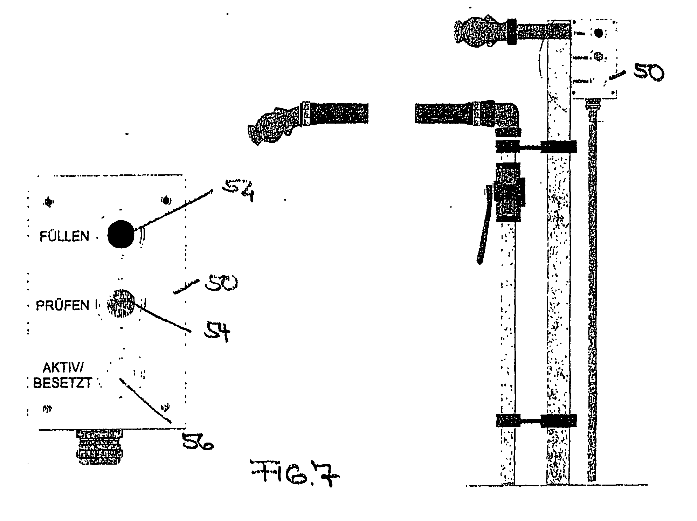

Um nun mit der erfindungsgemäßen Anlage eine Dichtigkeitsprüfung durchzuführen, ist es erforderlich, sicherzustellen, daß bei der Mehrfachnutzung des Bremsprobegerätes während der Bremsprüfung nur ein Zug am Bremsprobegerät angeschlossen ist. Für die Auswahl, an welchem Zusatzgerät 10.1, 10.2, 10.3 bzw. Schlauchständer geprüft werden soll, gibt es im Prinzip zwei Möglichkeiten. Die erste Möglichkeit besteht darin, den Betriebszustand sowie die Zusatzgeräteeinheit direkt am zentralen Bremsprobegerät auszuwählen. Ein zentrales Bremsprobegerät zur Auswahl des jeweiligen Zusatzgerätes ist in Figur 6 dargestellt. Das Bremsprobegerät 1 umfaßt einen Schalter 40 mit vier Positionen 1, 2, 3 und 4 für beispielsweise vier an das zentrale Bremsprobegerät angeschlossene Zusatzgeräte sowie der Position "Füllen". In der Schalterstellung "Füllen" sind alle Kolbenventile der Zusatzgeräteeinheiten 10.1, 10.2 sowie 10.3 geöffnet. Das Bremsprobegerät stellt einen Betriebsdruck von 4,8 bar in der Hauptluftleitung (HL) ein. Sobald an eine der Anschlußstellen ein Zug angeschlossen wird, dessen Luftsystem nahezu leer ist, wird die Füllroutine ausgeführt. Dies bedeutet, daß der Fülldruck abhängig vom Luftbedarf des neu angeschlossenen Zuges auf bis zu 6 bar angehoben wird. Anschließend wird der Druck innerhalb der Unempfindlichkeit der Steuerventile auf das Sollniveau von 4,8 bar abgesenkt. An einem bereits vorher auf 4,8 bar aufgefüllten Zug werden, sofern nicht der Absperrhahn des Zuges geschlossen wird, die Bremsen durch den stattfindenden Luftaustausch angelegt.

Für die Durchführung der Bremsprobe wird durch entsprechendes Einstellen des Wahlschalters 40 auf eine der Ziffern 1, 2, 3 oder 4 die entsprechende Zusatzgeräteeinheit aktiviert. Die Befehle für die Bremsprobe, nämlich Dichtheitsprüfung, Bremsen oder Lösen werden nur dann akzeptiert, wenn der Auswahlschalter 40 in einer der Stellungen 1 bis 4 steht. Durch die Auswahl mit Hilfe des Wahlschalters 40 wird das Kolbenventil der ausgewählten Zusatzgeräteeinheit aktiviert. Auf diese Art und Weise kann ausgeschlossen werden, daß durch Anschließen eines leeren Zuges die Bremsen eines zu geraden prüfenden Zuges angelegt werden.

Um die Wege für das Prüfpersonal, die bei Durchführen der Bremsprobe an verschiedenen Stellen und damit Zusatzgeräten die entsprechende Auswahl immer am Wahlschalter 40 der zentralen Bremsprobegeräteeinheit vornehmen müssen, zu reduzieren, ist in einer vorteilhaften weiteren Ausführungsform vorgesehen, die Zusatzgeräteeinheit sowie die zentrale Bremsprobeeinheit mit einer Fernbetätigung auszustatten und mit Hilfe dieser Fernbetätigung die jeweilige Zusatzgeräteeinheit auszuwählen und zu aktivieren. Standardmäßig ist bei einer derartigen Ausführungsform das zentrale Bremsprobegerät im Betriebsmodus "Füllen". Dies bedeutet, daß alle Kolbenventile der Zusatzgeräteeinheiten geöffnet sind und mehrere Züge parallel gefüllt werden. Das Ende des Füllvorganges wird in einer besonders bevorzugten Ausführungsform auf einer Fernbetätigung 50 des jeweiligen Zusatzgerätes angezeigt. Eine derartige Fernbetätigung 50 ist in Figur 7 gezeigt. Deutlich zu erkennen der Taster 52 mit Anzeigeeinrichtung, die dann aufleuchtet, wenn der Füllvorgang abgeschlossen ist. Sobald die Anzeigeeinrichtung des Tasters 52, die den Abschluß des Füllvorganges anzeigt, aufleuchtet, kann eine Zusatzgeräteeinheit 10.1, 10.2, 10.3 durch Drücken auf den Prüftaster 54 ausgewählt werden. Sobald die Auswahl vorgenommen wird, blinkt die Meldelampe 56 "Aktiv/Besetzt" der Fernbetätigung 50 des jeweiligen, ausgewählten Zusatzgerätes 10.1, während die Meldelampen 50 der Fernbetätigungen der üblichen Zusatzgeräte 10.2, 10.3 auf Dauerlicht schalten, womit signalisiert wird, daß an einem der Anschlüsse eine Bremsprobe durchgeführt wird. In diesem Betriebszustand ist nur das Kolbenventil am ausgewählten Zusatzgerät aktiv, alle anderen Kolbenventile sind abgeschaltet. Aussschließlich in diesem Betriebszustand werden die Befehle für die Bremsprobe, nämlich Dichtheitsprüfung, Bremsen, Lösen akzeptiert. Nach dem Ende der Bremsprobe muß das ausgewählte Zusatzgerät wieder freigegeben werden. Dies wird durch Drücken des Tasters 52 mit Anzeigeeinrichtung, der sogenannten "Füllen"-Taste der Fernbetätigung 50 durchgeführt. An allen Fernbetätigungen erlischt wieder der Leuchtmelder 56 "Aktiv/Besetzt" und es kann das nächste Zusatzgerät aktiviert werden. Der Vorteil einer dezentralen Auswahl liegt darin, daß es nicht notwendig ist, zur Aktivierung unterschiedlicher Zusatzgeräte 10.1, 10.2, 10.3 eine Auswahl am entfernt liegenden zentralen Bremsprobegerät 1 zu treffen.

Mit der Erfindung wird erstmals eine Bremsanlage angegeben, bei der Bremsprüfungen an Schienenfahrzeugen, insbesondere Zügen im großen Abstand von einem zentralen Bremsprobegerät vorgenommen werden können.

### Bezugszeichenliste

- 1: Bremsprobegerät
- 3.1, 3.2: Schienenfahrzeug
- 10, 10.1, 10.2, 10.3: Zusatzgeräteeinheit
- 12: Kolbenventil
- 14: Magnetventil
- 16: Drucksensor
- 20: Schlauchständer
- 22: Druckluftschlauch
- 24: Luftleitung
- 26: Funkfernsteuerung
- 30.1, 30.2, 30.3, 30.4, 30.5, 30.6,: Gleise
- 32.1, 32.2,: elektrische
- 32.3: Steuerleitungen
- 40: Positionsauswahlschalter am zentralen Bremsprobegerät
- 50: Fernbetätigung
- 52: Taster mit Anzeigeeinrichtung
- 54: Prüftaster
- 56: Meldelampe Aktiv/Besetzt

- D: Abstand Bremsprobegerät-Schienenfahrzeug
- GL:: Abstand Bremsprobegerät - zu prüfendes Schienenfahrzeug (Schlauchlänge)

## Patentansprüche

1. Bremsprobeanlage zur Prüfung von Druckluftbremsen bei Schienenfahrzeugen, umfassend
1.1 wenigstens ein zentrales Bremsprobegerät (1)
1.2 wenigstens eine entfernt vom zentralen Bremsprobegerät angeordnete Zusatzgeräteeinheit (10.1, 10.2, 10.3), **dadurch gekennzeichnet, daß**
1.3 die Zusatzgeräteeinheit (10.1, 10.2, 10.3) mit dem zentralen Bremsprobegerät (1) verbunden und an das zu prüfende Schienenfahrzeug (3.1, 3.2) mittels einer Leitung (22) anschließbar ist, wobei die Zusatzgeräteeinheit (10.1, 10.2, 10.3)
1.4 Mittel zum Absperren der Luftzufuhr zum zu prüfenden Schienenfahrzeug sowie
1.5 Drucksensoren (16) umfaßt, und die Zusatzgeräteeinheit (10.1, 10.2, 10.3) mittels einer Luftleitung (24) zur Luftnachspeisung aus dem zentralen Bremsprobegerät (1) und einer elektrischen Verbindungsleitung zur Übermittlung eines vom Drucksensor (16) erfaßten Druckabfalls an das zentrale Bremsprobegerät (1) mit dem zentralen Brensprobegerät (1) Verbunden ist.

2. Bremsprobeanlage nach Anspruch 1, **dadurch gekennzeichnet, daß**
die Mittel zum Absperren der Luftzufuhr ein Kolbenventil (12) und ein Magnetventil (14) zur Ansteuerung umfassen.

3. Bremsprobeanlage nach Anspruch 1 oder 2, **dadurch gekennzeichnet, daß**
das Zusatzgerät (10.1, 10.2, 10.3) derart angeordnet ist, daß die Länge der Leitung (22) vom Zusatzgerät (10.1, 10.2, 10.3) zum zu prüfenden Schienenfahrzeug (3.1, 3.2) höchstens 30 m, insbesondere höchstens 25 m beträgt.

4. Bremsprobeanlage nach einem der Ansprüche 1 bis 3, **dadurch gekennzeichnet, daß**
das Zusatzgerät (10.1, 10.2, 10.3) zwischen zwei Gleisen (30.1, 30.2, 30.3, 30.4, 30.5, 30.6) einer Gleisanlage angeordnet ist.

5. Bremsprobeanlage gemäß einem der Ansprüche 1 bis 4, **dadurch gekennzeichnet, daß**
das zentrale Bremsprobegerät (1) Mittel zum Durchführen der nachfolgenden Funktionen
Füllen
Angleichen
Schnellbremsung
Dichtheitsprüfung
Bremsen
Lösen
der Druckluftbremse des zu prüfenden Schienenfahrzeuges (3.1, 3.2) umfasst.

6. Bremsprobeanlage gemäß einem der Ansprüche 1 bis 5, **dadurch gekennzeichnet, daß**
die Bremsprobeanlage (1) eine Vielzahl von Zusatzgeräten (10.1, 10.2, 10.3) umfasst und das zentrale Bremsprobegerät (1) eine Auswahleinrichtung (40) zur Auswahl genau eines der Vielzahl von Zusatzgeräten.

7. Bremsprobeanlage gemäß einem der Ansprüche 1 bis 6, **dadurch gekennzeichnet, daß**
das zentrale Bremsprobegerät (1) eine Fernsteuerung (26) umfasst.

8. Bremsprobeanlage nach Anspruch 7, **dadurch gekennzeichnet, daß**
die Bremsprobeanlage eine Vielzahl von Zusatzgeräten (10.1, 10.2, 10.3) umfasst, wobei jedes Zusatzgerät eine Fernbetätigung (50) aufweist, die mit der Fernsteuerung (26) des zentralen Bremsprobegerätes kommunziert und mit der das jeweilige Zusatzgerät ausgewählt werden kann.

9. Verfahren zur Prüfung von Druckluftbremse mit einer Bremsprobeanlage, wobei die Bremsprobenanlage (1) eine Vetzahl von Zusatzgeräten (10.1, 10.2, 10.3) umfasst und das zentrale Bremsprobegerät (1) eine Auswahleinrichtung (40) zur Auswahl genau eines der Vielzahl von Zusatzgeräten aufweist und das Verfahren die nachfolgenden Schritte umfasst:
9.1. am zentralen Bremsprobegerät (1) wird zur Durchführung einer Prüfung der Druckluftbremse eines Schienenfahrzeuges (3.1, 3.2) das diesem Schienenfahrzeug zugeordnete Zusatzgerät (10.1, 10.2, 10.3) ausgewählt und aktiviert
9.2. es wird mindestens einer der nachfolgenden Befehle Dichtheitsprüfung
Bremsen
Lösen
der Druckluftbremse des diesem Zusatzgerät (10.1, 10.2,10.3) zugeordneten Schienenfahrzeuges (3.1, 3.2) durchgeführt.

10. Verfahren nach Anspruch 9 wobei das Zusatzgerät (10.1,10.2,10.3) durch einen Auswahlbefehl, der mit Hilfe einer am Zusatzgerät (10.1, 10.2, 10.3) angeordneten Fernbetätigung an die zentrale Steuereinheit übermittelt, ausgewählte wird und das zentrale Bremsprobegerät (1) aufgrund des Auswahlbefehles alle anderen mit dem Bremsprobegerät (1) verbundenen Zusatzgeräte (10.1, 10.2, 10.3) sperrt.

## Claims

1. Brake test system for testing air brake systems in rail vehicles, comprising:
1.1 at least one central brake test device (1),
1.2 at least one additional direct-air unit (10.1, 102, 10.3) disposed remotely from said central brake test device,
**characterised in that**
1.3 said additional direct-air unit (10.1, 10.2, 10.3) is connected to said central brake test device (1) and is adapted to be connected by means of a line (22) to the rail vehicle to be tested (3.1, 3.2), with said additional direct air unit (10.1, 10.2, 103) comprising
1.4 means for shutting off the air supply to the rail vehicle to be tested, as well as
1.5 pressure-sensing means (16), and with said additional direct-air unit (10.1, 10.2, 10.3) being connected to said central brake test device (1) by means of an air supply pipe (24) for make-up air feed from said central brake test device (1) and by means of an electric connecting line for transmission of a drop in pressure detected by said pressure-sensing means (16) to said central brake test device (1).

2. Brake test system according to Claim 1, **characterised in that**
said means for shutting off the air supply comprise a piston valve (12) and a solenoid valve (14) for control.

3. Brake test system according to Claim 1 or 2, **characterised in that**
said additional direct-air unit (10.1, 10.2, 10.3) is so arranged that the length of said line (22) from said additional direct-air unit (10.1, 10.2, 10.3) to the rail vehicle (3.1, 3.2) to be tested corresponds to 30 m at maximum, in particular to 25 m at maximum.

4. Brake test system according to any of the Claims 1 to 3, **characterised in that**
said additional direct-air unit (10.1, 10.2, 10.3) is arranged between two tracks (30.1, 30.2, 30.3, 30.4, 30.5, 30.6) of a track system.

5. Brake test system according to any of the Claims 1 to 4, **characterised in that**
said central brake test device (1) comprises means for performing the following functions:
filling
adaptation
rapid brake application
tightness check
brake application
brake release
of the air brake on the rail vehicle (3.1, 3.2) to be tested.

6. Brake test system according to any of the Claims 1 to 5, **characterised in that**
said brake test system (1) comprises a plurality of additional direct-air units (10.1, 10.2, 10.3) and said central brake test device (1) includes a selector means (40) for selecting precisely one among the plurality of additional direct-air units.

7. Brake test system according to any of the Claims 1 to 6, **characterised in that**
said central brake test device (1) includes a remote actuator (26).

8. Brake test system according to Claim 7, **characterised in that**
the brake test system comprises a plurality of additional direct-air units (10.1, 10.2, 10.3) whereof each additional direct-air unit includes a remote actuator (50) that communicates with said remote actuator (26) of said central brake test device and is adapted for selecting the respective additional direct-air unit.

9. Method of testing the air brake by means of a brake test system, with said brake test system (1) comprising a plurality of additional direct-air units (10.1,10.2, 10.3) and with said central brake test device (1) including a selector means (40) for selecting precisely one among the plurality of additional direct-air units, whilst the method includes the following steps:
9.1 the additional direct-air unit (10.1, 10.2, 10.3) is selected and activated at said central brake test device (1) for carrying through a check of the air brake of a rail vehicle (3.1, 3.2), which unit is associated with this rail vehicle;
9.2 at least one of the following commands is carried out:
tightness check
brake application
brake release
of the air brake on the rail vehicle (3.1, 3.2) associated with this additional direct-air unit (10.1, 10.2, 10.3).

10. Method according to Claim 9, wherein said additional direct-air unit (10.1, 10.2, 10.3) is selected by a select command that is communicated to said central controller by means of a remote actuator disposed on said additional direct-air unit (10.1, 10.2, 10.3) and wherein said central brake test device (1) shuts off all other additional direct-air units (10.1, 10.2, 10.3) connected to the brake test device (1) in response to said select command.

## Revendications

1. Système d'essai de frein à essayer des systèmes de frein pneumatique aux véhicules ferroviaires, comprenant :
1.1 au moins un dispositif central d'essai de frein (1),
1.2 au moins one unité de frein supplémentaire (10.1, 102, 10.3) disposée à distance dudit dispositif central d'essai de frein,
**caractérisé en ce que**
1.3 ladite unité de frein supplémentaire (10.1, 10.2, 10.3) est raccordée audit dispositif central d'essai de frein (1), en étant apte à être reliée moyennant une ligne (22) du véhicule ferroviaire à essayer (3.1, 3.2), à ladite unité de frein supplémentaire (10.1, 10.2, 103) comprenant
1.4 un moyen à bloquer l'alimentation en air au véhicule ferroviaire à essayer, ainsi que
1.5 des détecteurs de pression (16), à ladite unité de frein supplémentaire (10.1, 10.2, 10.3) étant raccordée audit dispositif central d'essai de frein (1) moyennant un conduit d'alimentation en air (24) pour l'alimentation secondaire en air à partir dudit dispositif central d'essai de frein (1) et moyennant une ligne de connexion électrique pour le transfert d'une chute en pression, détectée par lesdits détecteurs de pression (16), audit dispositif central d'essai de frein (1).

2. Système d'essai de frein selon la revendication 1, **caractérisé en ce**
**que** ledit moyen à bloquer l'alimentation en air comprend une soupape à piston (12) et une électrovanne (14) pour contrôle.

3. Système d'essai de frein selon la revendication 1 or 2, **caractérisé en ce**
**que** ladite unité de frein supplémentaire (10.1, 10.2, 10.3) est disposée d'une telle manière, que la longueur de ladite ligne (22) à partir de ladite unité de frein supplémentaire (10.1, 10.2, 10.3) vers le véhicule ferroviaire (3.1, 3.2) à essayer corresponde à 30 m au maximum, en particulier à 25 m au maximum.

4. Système d'essai de frein selon une quelconque des revendications 1 to 3, **caractérisé en ce**
**que** ladite unité de frein supplémentaire (10.1, 10.2, 10.3) est disposée entre deux voies (30.1, 30.2, 30.3, 30.4, 30.5, 30.6) d'un système à voies.

5. Système d'essai de frein selon une quelconque des revendications 1 to 4, **caractérisé en ce**
**que** ledit dispositif central d'essai de frein (1) comprend des moyens à réaliser les fonctions suivantes :
alimentation
adaptation
serrage du frein à action rapide
épreuve d'étanchéité
serrage du frein
desserrage du frein
du frein pneumatique au véhicule ferroviaire (3.1, 3.2) à essayer.

6. Système d'essai de frein selon une quelconque des revendications 1 à 5, **caractérisé en ce**
**que** ledit système d'essai de frein (1) comprend une pluralité d'unités de frein supplémentaires (10.1, 10.2, 10.3) et en ce que ledit dispositif central d'essai de frein (1) renferme un moyen sélecteur (40) à choisir précisément une parmi la pluralité d'unités de frein supplémentaires.

7. Système d'essai de frein selon une quelconque des revendications 1 à 6, **caractérisé en ce**
**que** ledit dispositif central d'essai de frein (1) comprend un acteur à distance (26).

8. Système d'essai de frein selon la revendication 7, **caractérisé en ce**
**que** le système d'essai de frein comprend une pluralité d'unités de frein supplémentaires (10.1, 10.2, 10.3), dont chaque unité de frein supplémentaire est munie d'un acteur à distance (50), qui se trouve en communication avec ledit acteur à distance (26) dudit dispositif central d'essai de frein et est adapté à choisir l'unité respective de frein supplémentaire.

9. Procédé à essayer le frein pneumatique moyennant un système d'essai de frein, audit système d'essai de frein (1) comprenant une pluralité d'unités de frein supplémentaires (10.1, 10.2, 10.3) et audit dispositif central d'essai de frein (1) comprenant un moyen sélecteur (40) à choisir précisément une parmi la pluralité d'unités de frein supplémentaires, pendant que le procédé comprend les étapes suivantes :
9.1 l'unité de frein supplémentaire (10.1, 10.2, 10.3) est choisie et activée audit dispositif central d'essai de frein (1) afin de réaliser une épreuve du frein pneumatique d'un véhicule ferroviaire (3.1, 3.2), à ladite unité étant affectée à ce véhicule ferroviaire;
9.2 au moins une des commandes suivantes est exécutée :
épreuve d'étanchéité
serrage du frein
desserrage du frein
du frein pneumatique au véhicule ferroviaire (3.1, 3.2) affecté à cette unité de frein supplémentaire (10.1, 10.2, 10.3).

10. Procédé selon la revendication 9, dans lequel ladite unité de frein supplémentaire (10.1, 10.2, 10.3) est choisie par une commande de sélection, qui est communiquée à ladite unité centrale de commande moyennant un acteur à distance disposé à ladite unité de frein supplémentaire (10.1, 10.2, 10.3), et dans lequel ledit dispositif central d'essai de frein (1) coupe toutes les autres unités de frein supplémentaires (10.1, 10.2, 10.3) raccordées audit dispositif d'essai de frein (1) en réponse à ladite commande de sélection
